Europäisches Patentamt

European Patent Office

Office européen des brevets

(19)

(11) **EP 0 733 087 B1**

(12) **EUROPÄISCHE PATENTSCHRIFT**

(45) Veröffentlichungstag und Bekanntmachung des Hinweises auf die Patenterteilung:
**14.03.2001 Patentblatt 2001/11**

(21) Anmeldenummer: **95931876.7**

(22) Anmeldetag: **02.10.1995**

(51) Int Cl.[7]: **C08K 9/12**, C08L 57/10

(86) Internationale Anmeldenummer:
**PCT/CH95/00221**

(87) Internationale Veröffentlichungsnummer:
**WO 96/11229 (18.04.1996 Gazette 1996/17)**

(54) **VERNETZUNGSMITTEL FÜR POLYMERE MIT SÄUREANHYDRIDGRUPPEN**

CROSS-LINKING AGENTS FOR POLYMERS WITH ACID ANHYDRIDE GROUPS

AGENTS DE RETICULATION POUR POLYMERES A GROUPES ANHYDRIDES D'ACIDES

(84) Benannte Vertragsstaaten:
**CH DE ES FR GB IT LI**

(30) Priorität: **10.10.1994 CH 303694**
        **23.08.1995 CH 239895**

(43) Veröffentlichungstag der Anmeldung:
**25.09.1996 Patentblatt 1996/39**

(73) Patentinhaber: **Elf Atochem S.A.**
**92800 Puteaux Hauts-de-Seine (FR)**

(72) Erfinder: **Elf Atochem S.A.**
**92800 Puteaux Hauts-de-Seine (FR)**

(74) Vertreter: **Hepp, Dieter et al**
**Hepp, Wenger & Ryffel AG,**
**Friedtalweg 5**
**9500 Wil (CH)**

(56) Entgegenhaltungen:
**DE-A- 1 494 369      DE-A- 2 724 925**
**US-A- 2 882 244      US-A- 3 533 987**

• **DATABASE WPI Section Ch, Derwent Publications Ltd., London, GB; Class A21, AN 73-49775U & SU,A,361 186 ( NEPOMNYASCHII AI KOLOSNIT)**

Bemerkungen:
Die Akte enthält technische Angaben, die nach dem Eingang der Anmeldung eingereicht wurden und die nicht in dieser Patentschrift enthalten sind.

## Beschreibung

Die Erfindung betrifft ein Vernetzungsmittel auf Basis von Aminen für Polymere mit Säureanhydridgruppen.

Vernetzbare Polymere mit Säureanhydridgruppen sind wertvolle, reaktionsfähige Ausgangsstoffe, welche Isocyanatprepolymere, Polysulfide, Epoxyd- oder Acrylharze in vielen Anwendungen für flüssige oder feste Kunststoffe ersetzen können, beispielsweise in Klebstoffen, Dichtungsmassen unä Beschichtungen. Als Vernetzungsmittel haben sich vor allem Amine bewährt. Sie lassen sich hervorragend für die Herstellung hydrolysestabiler und thermisch resistenter Vernetzungsprodukte verwenden.

Aliphatische und aromatische Amine haben den Nachteil, dass sie mit den säureanhydridgruppenhaltigen Polymeren sehr rasch reagieren. Die Gemische der Komponenten weisen bei Raumtemperatur oder bei erhöhten Temperaturen Verarbeitungszeiten im Bereich von wenigen Sekunden bis Minuten auf. Verarbeitungszeiten im Bereich von 5 bis 300 Minuten erhält man, wenn sterisch gehinderte aromatische Amine als Vernetzungsmittel verwendet werden. Solche Systeme, wie sie beispielsweise in der WO 94/04624 beschrieben werden, haben den Nachteil, dass die sterisch gehinderten Amine teuer sind und meist fest vorliegen, so dass sie nur als Lösungen in Weichmachern oder Lösungsmitteln eingesetzt werden können.

Alternativ können Amine mit bekannten Blockierungsmitteln in eine weniger reaktive Form übergeführt werden, zum Beispiel in die Form eines Ketimins, Aldimins oder Oxazolans. Die Amine werden nach Einwirkung von Wasser freigesetzt und können mit den Säureanhydridengruppen reagieren. Die ebenfalls freiwerdenden Blockierungsmittel haben aber den Nachteil, dass sie oft dem Vernetzungsprodukt einen langandauernden unangenehmen Geruch verleihen. Zudem erhöhen sie wesentlich den flüchtigen Anteil der Mischungen.

Die Aufgabe der Erfindung besteht insbesondere darin, bei einem Polymer mit Säureanhydridgruppen ein Vernetzungsmittel einzusetzen, das sich in besonders vorteilhafter Weise für die kontrollierte Reaktion mit den vernetzbaren Polymeren eignet und die Freigabe der adsorbierten Amine bei hohen Desorptionstemperaturen ermöglicht. Diese Aufgabe wird gemäss Kennzeichen der unabhängigen Ansprüche gelöst.

Molekularsiebe sind künstlich hergestellte kristalline Metallaluminosilikate, die zu der als Zeolithe bekannten Klasse von Mineralien gehören. Die dehydratisierten Kristalle formen ein Netzwerk von Hohlräumen, die über definierte Kapillaren miteinander in Verbindung stehen, was zu einer sehr grossen inneren Oberfläche führt. Sie vermögen an ihrer Kristallstruktur resp. an ihrer inneren Oberfläche polare Chemikalien zu adsorbieren.

Die erfindungsgemäss verwendeten Zeolithe sind Alkalimetall- oder Erdalkalimetall-aluminosilikate und weisen eine sehr grosse Porenzahl mit gleichförmiger Abmessung auf. Moleküle, die klein genug sind, können in die Poren des wasserfreien Molekularsiebes eindringen und adsorbiert werden. Die Poren weisen gleichmässige Durchmesser auf, die je nach der Zusammensetzung des Zeoliths und der Temperatur von 0.3 bis 1.5 nm betragen können.

Für die erfindungsgemässen Vernetzungsmittel werden handelsübliche Molekularsiebpulver eingesetzt, die mit Porendurchmesser von 0.38 nm (handelsübliche Bezeichnung: Typ 4 A) oder 0.44 nm (Typ 5 A) von verschiedenen Herstellern angeboten werden. Bevorzugt werden freifliessende Pulver mit Partikelgrösse unter 50 μm, besonders unter 20 μm.

Die Adsorptionskapazität der Molekularsiebpulver für Wasser bei Raumtemperatur beträgt im Gleichgewichtszustand je nach Typ 20 bis 34 Gewichts-%. Die wasserfreien Molekularsiebpulver können mit 3 bis 30, bevorzugt mit 5 bis 25 Gewichts-% Amin beladen sein.

Die Beladung von Molekularsiebpulvern mit polaren Chemikalien ist Stand der Technik, die gängigsten Methoden werden zum Beispiel von S. Borgmann et. al., in Plaste und Kautschuk, 30 (1) 20 (1983) beschrieben.

Je nach den chemischen und physikalischen Eigenschaften der Amine werden diese über die Gasphase, zum Beispiel in einem Strom eines Trägergases, über Sublimation des Amins und Adsorption am Molsieb oder über Lösungen in Weichmachern, flüssigen Verschnittmitteln oder'Lösungsmitteln aufgebracht. Die Lösungsmittel können nach der Adsorption des Amins durch Destillation, gegebenenfalls unter vermindertem Druck, entfernt werden. Die beladenen Molsiebe können auch im Gemisch mit weiteren unbeladenen Molsieben verwendet werden, welche als Trocknungsmittel oder Stabilisierungsmittel dienen. Zusätzliche Molsiebe, welche zur Wasseradsorption bestimmt sind, können auch andere Porendurchmesser haben. Vorteilhaft ist auch die Verwendung von verschiedenen Aminen auf einem oder unterschiedlichen Molekularsiebpulvern.

Amine zur Vernetzung säureanhydridgruppenhaltiger Polymere sind Ethylendiamin und Ethanolamin.

In einer besonderen Ausführungsform der erfindungsgemässen Vernetzungsmittel können bis zu 50 Aequivalentprozent der reaktiven Gruppen des Vernetzungsmittels durch Hydroxygruppen ersetzt sein, beispielsweise durch Hydroxygruppen von Aminoalkoholen oder von Polyolen. Die mit Polyolen beladenen Molekularsiebe lassen sich wie die aminbeladenen Molekularsiebe zur Vernetzung der anhydridhaltigen Polymere verwenden.

Die wenigstens teilweise mit einem Amin beladenen Molekularsiebpulver können zusätzlich mit einem Katalysator für die Reaktion des Säureanhydrids mit den Hydroxyverbindungen beladen sein.

Geeignete Katalysatoren, die in vorteilhafter Weise in Mengen von maximal 2 Gewichts-% bezogen auf das Totalgewicht der Formulierung eingesetzt werden, sind bevorzugt tertiäre aliphatische Amine mit 1 bis 14 C-Atomen im Alkylrest, Di-aza-bicyclooctan, Diazabicycloundecen, Dimethylbenzylamin, Methylmorpholin, Dimethylpiperazin, N-alkylsubstituierte Imidazole und ihre Gemische.

Die erfindungsgemässen Vernetzungsmittel werden vorteilhaft für die Herstellung von reaktiven, vernetzbaren Polymersystemen auf Basis von Polymeren verwendet, welche Säureanhydridgruppen tragen. Unter wasserfreien Bedingungen sind Gemische aus den mit Aminen beladenen Molekularsieben und säureanhydridgruppenhaltigen Polymeren stabil und auch in Gegenwart von Zuschlagstoffen bei Raumtemperatur oder leicht erhöhter Temperatur im unvernetzten Zustand lagerfähig.

Solche Mischungen müssen bis zur Verarbeitung in feuchtigkeitsundurchlässigen Behältern bei Temperaturen unter 70 °C, bevorzugt unter 55 °C gelagert werden. Wird diese Lagertemperatur wesentlich überschritten, sinkt die Lagerbeständigkeit der Masse, die üblicherweise mehrere Monate beträgt. Besonders stabil im Gemisch mit anhydridgruppenhaltigen Polymeren sind mit Ethylendiamin beladene Molsiebpulver vom Typ 4A, welche eine Desorptionstemperatur von 175 OC zeigen. Auf Grund des niedereh Aequivalentgewichtes des Ethylendiamins und der niederen Kosten von Molekularsiebpulvern vom Typ 4A ist die Verwendung dieser Kombination auch oekonomisch vorteilhaft.

Die adsorbierten Amine werden durch Erwärmen der Massen auf Temperaturen über der Desorptionstemperatur freigesetzt. Bei Temperaturen über der sogenannten Desorptionstemperatur liegt das Adsorptionsgleichgewicht auf der Seite des freien Amins. Experimentell wurden beispielsweise folgende Temperaturbereiche festgestellt, wobei die gemessene Desorptionstemperatur von der Aufheizgeschwindigkeit des Systems abhängt:

| Molsiebtyp | Amin | Desorptionstemperatur °C |
|---|---|---|
| 4 A | Ethylendiamin | 175 +/- 5 |
| 4 A | Ethanolamin | 175 +/- 5 |
| 13 X | Ethylendiamin | 130 +/- 5 |
| 13 X | Ethanolamin | 125 +/- 5 |
| 13 X | Diethylentriamin | 125 +/- 5 |
| 13 X | Piperazin | 120 +/- 5 |

Durch Erwärmung des Systems kann auch mittels Freisetzung von Kristallwasser oder von an Füllstoffen und Molekularsieben adsorbiertem Wasser das Gleichgewicht in der Richtung des freien Amins verschoben und so die Vernetzungsreaktion herbeigeführt oder beschleunigt werden. Die Erwärmung des Systems auf Vernetzungstemperatur kann durch Strahlungswärme, Konvektionswärme, durch Widerstands-, Induktions- oder Mikrowellenheizung, durch Reibungswärme oder mit Ultraschallbestrahlung erfolgen.

Die Reaktions- oder Vernetzungstemperatur, die gleich oder höher als die Desorptionstemperatur sein muss, liegt im Bereich von 80 bis 190 °C, bevorzugt im Bereich 100 bis 180 °C. Die Vernetzungstemperatur kann beinflusst werden durch die Art des Molekularsiebes und des Amins, durch die Konzentration des auf dem Molekularsieb adsorbierten Amins, sowie durch geeignete Massnahmen, die den Wassergehalt des Systems steuern. Dazu eignen sich auch wasseradsorbierende Substanzen, wie unbeladene, kalzinierte Molekularsiebpulver.

Polymere oder Oligomere, welche die reaktive Basis dieser Massen bilden, sind bei Raumtemperatur feste oder flüssige säureanhydridgruppenhaltige Polymere mit Molekulargewichten Mn von 500 bis 1 000 000 Dalton. Bevorzugt sind Polymere mit einem Molekulargewicht Mn von 1000 bis 500 000 Dalton. Die anhydridgruppenhaltigen Polymere oder Oligomere weisen eine den Säureanhydridgruppen entsprechende Säurezahl (bestimmt mit wasserfreier alkoholischer Kaliumhydroxydlösung nach DIN 53 402) von 0.4 bis 445 mg KOH/g auf. Dies entspricht beispielsweise einem Gehalt von ungefähr 0.07 bis 77 Gewichtsprozent Maleinsäureanhydrid am Gewicht des anhydridhaltigen Polymers.

Die Säureanhydridgruppen können statistisch oder regelmässig über das Polymermolekül verteilt oder in endständiger Position sein. Die Einführung der Säureanhydridgruppen kann durch Copolymerisation, durch Umsetzung mit endständigen reaktiven Gruppen, durch nachfolgende Addition von ungesättigten Säureanhydriden an einzelne oder konjugierte Doppelbindungen oder durch Propfreaktionen, erfolgen. Die entsprechenden Synthesemethoden sind Stand der Technik und in der Fachliteratur und in Patentschriften beschrieben. Eine umfassende Übersicht über anhydridgruppenhaltige Polymere, ihre Synthesemethoden und Eigenschaften, speziell von solchen die unter Verwendung von Maleinsäureanhydrid synthetisiert sind, ist enthalten in B.C.Trivedi und B. M. Culbertson; Maleic Anhydride, Plenum Publ. Co. New York (1982).

Die erfindungsgemäss verwendeten Polymere sind vorteilhaft einzeln oder als Gemische ausgewählt aus der Gruppe

- Copolymere von ungesättigten cyclischen Säureanhydriden, speziell Malein- oder Itaconsäureanhydrid, mit olefinisch ungesättigten Monomeren, zum Beispiel Copolymere von Acrylsäure- und Methacrylsäureestern mit Itaconsäureanhydrid, - Additionsprodukte von ungesättigten cyclischen Anhydriden an Polymere mit einzelnen oder konjugierten Doppelbindungen, zum Beispiel Additionsprodukte von Maleinsäureanhydrid an Doppelbindungen von Polybutadienen,

- Additionsprodukte von ungesättigten cyclischen Säureanhydriden an Styrol-Butadienkautschuke, thermoplastische Styrol-Butadien- und Styrol-Isopren-Blockcopolymere, oder an ungesättigte Abbauprodukte von hochmolekularen Naturkautschuken, zum Beispiel Additionsprodukte von Maleinsäureanhydrid an teilweise hydrierte Blockcopolymere von Styrol-Butadien,
- Additionsprodukte von ungesättigten cyclischen Säureanhydriden an Polymere mit Mercaptangruppen, beispielsweise an Urethane von Isocyanatprepolymeren mit Mercaptoethanol,
- Additionsprodukte, welche erhalten wurden durch Propfreaktionen von olefinisch ungesättigten cyclischen Säureanhydriden an Polymere, zum Beispiel Propfprodukte von Maleinsäureanhydrid an ein Copolymer von Ethylen mit Vinylacetat oder an ein Terpolymer von Ethylen, Propylen und Buten,
- polymere Ester-anhydride oder Amid-anhydride, welche erhalten wurden durch Kondensation von hydroxy- oder aminofunktionellen Polymeren mit Trimellithsäureanhydrid, Pyromellithsäure-dianhydrid, Benzoltetracarbonsäure-dianhydrid, Benzophenontetracarbonsäure-dianhydrid oder Ethylen-bistrimellithsäureanhydrid.

Die Säureanhydridgruppen können nur in einer Polymerkomponente enthalten sein. In vielen Fällen ist es von Vorteil, dass man Gemische von Polymeren mit unterschiedlichem Gehalt an Anhydridgruppen oder mit verschiedenen Molekulargewichtsbereichen verwendet. Beispielsweise kann es verarbeitungsmässig vorteilhaft sein, wenn ein hochmolekulares Polymer mit einem niedrigen Gehalt an Säureanhydridgruppen mit einem kurzkettigen Polymeren mit einem höheren Gehalt an Anhydridgruppen vermischt ist.

Das stöchiometrische Verhältnis von Säureanhydridgruppen des Polymers zu primären oder sekundären Aminogruppen des Vernetzungsmittels liegt im Bereich von 0.5 bis 5, bevorzugt zwischen 0.6 und 3.

Die Eigenschaften der unvernetzten und vernetzten Massen können durch den Fachmann gezielt gesteuert werden und hängen unter anderem vom Polymergehalt, von Anhydridgehalt des Polymers, vom Polymerisationsgrad, vom Anteil des Comonomeren, von der Funktionalität, von Verhältnis Säureanhydrid zu funktionellen Gruppen der Vernetzungsmittel, von der Art der funktionellen Gruppen und von Zusatzmitteln ab. Einen grossen Einfluss auf verschiedene Eigenschaften der Massen in Ausgangszustand oder in vernetztem Zustand haben verschiedene Zusatzstoffe, zum Beispiel:

Anorganische und organische Füllstoffe, Pigmente, Metallpulver, Farbstoffe, Russ, pyrogene Kieselsäure, kurzgeschnittene Fasern, Gummipulver, Weichmacher, Extenderöle, Bitumen, nichtreaktive Polymere, reaktive Modifizierungsmittel, Harze, klebrigmachende Harze, Haftvermittler, organofunktionelle Silane, Netzmittel, Silikonöle, flammhemmende Zusätze, Alterungsschutzmittel, Lichtschutzmittel, Korrosionsschutzmittel, Geruchsstoffe, fungistatisch und bakteriostatisch wirksame Stoffe, Thixotropiemittel, Treibmittel und Schaumstabilisatoren, Lösungsmittel. Die Verwendung und die Wirkung dieser Zusätze und die bevorzugten Konzentrationen sind Stand der Technik und dem Fachmann bekannt.

Die Erfindung betrifft auch ein Verfahren zur Herstellung eines vernetzbaren Polymersystems durch homogenes Vermischen des erfindungsgemässen Vernetzungsmittels mit Polymeren, welche Säureanhydridgruppen tragen, und wahlweise mit Zuschlagstoffen.

Schliesslich betrifft die Erfindung auch einkomponentige Polymersysteme zum Kleben, Beschichten, Dichten, Schäumen, Extrudieren, Giessen und Spritzgiessen, die aus den erfindungsgemässen Vernetzungsmitteln und Polymeren mit Säureanhydridgruppen herstellbar sind und als bei Raumbedingungen flüssige bis pastenförmige Massen oder als bei erhöhter Temperatur aufschmelzbare Massen verarbeitet werden können. Die erfindungsgemässen Massen eignen sich unter anderem zur Herstellung von reaktiven Schmelzklebstoffen und -haftklebstoffen, die unter wasserfreien Bedingungen gelagert, dann bei erhöhten Temperaturen thermoplastisch verarbeitet werden können.

Durch Erwärmen auf gleich oder über der Desorptionstemperatur werden die adsorbierten Amine freigesetzt, wobei deren Vernetzung mit den Säureanhydridgruppen eintritt. Nach dem Erkalten verfestigen sie sich und vernetzen unter Feuchtigkeitseinfluss weiter zu einer Masse mit erhöhter mechanischer Festigkeit, Wärmestandfestigkeit und Lösungsmittelresistenz.

Im vernetzten Zustand sind die Polymersysteme sehr weiche bis harte Massen mit unterschiedlicher Zugfestigkeit, Einreissfestigkeit, Druckverformungsrest, Glasübergangstemperatur, Wärmefestigkeit, Haftverhalten, Klebrigkeit und chemischer Beständigkeit.

**Beispiele**

**Beispiel 1:** Herstellung eines mit 8 % Ethylendiamin beladenen Molekularsiebpulvers

Verwendete Mischungsbestandteile:

(1) Purmol 4A stab.     Kalziniertes 4A-Molekuiarsiebpulver CU Chemie Uetikon AG, CH-Uetikon
(2) Ethylendiamin     purum, Fluka AG, CH-Buchs

16 g Ethylendiamin wurden in 150 ml Toluol gelöst und 184 g wasserfreies Molekularsiebpulver Purmol 4A eingetragen und vermischt. Die Mischung wurde unter gelegentlichem Schütteln während 3 Tagen bei Raumtemperatur gelagert, anschliessend wurde bei 60 °C unter Wasserstrahlvakuum das Lösungsmittel abdestilliert. Es resultierte ein geruchloses Pulver mit einem Gehalt an Ethylendiamin von 8 Gewichts-% und einem Equivalentgewicht von 375 g.

**Beispiel 2:** Herstellung eines mit 13 % Ethylendiamin beladenen Molekularsiebpulvers

In einem Exsikkator wurden 200 g wasserfreies 4A-Molekularsiebpulver in einer Schichtstärke von 1 cm in einer Petrischale ausgebreitet, in einer zweiten Petrischale wurden 30 g Ethylendiamin (1 Aequivalent) in den gleichen Exsikkator gebracht, danach der Luftraum des Exsikkators mit der Wasserstrahlvakuumpumpe kurz evakuiert. Nach 3 Tagen war das flüchtige Ethylendiamin über die Gasphase vom Molekularsieb adsorbiert. Durch Erhitzen des unregelmässig beladenen Molekularsiebes auf 100 °C in einem verschlossenen Kolben während 24 Stunden wurde eine gleichmässige Verteilung des Amins auf dem Pulver herbeigeführt. Das aminbeladene Molsiebpulver weist ein Aequivalentgewicht von 230 g auf.

**Beispiel 3:** Herstellung eines als Schmelzhaftklebstoff verwendbaren Polymersystems

Verwendete Mischungsbestandteile:

(1) Ethylenvinylacetat-copolymer, 33 % VA, mit ca. 1 % Maleinsäureanhydrid, Schmelzindex 20 g (190 °C, ASTM D 1238), Anhydrid-Aeq. ca. 9800 g
(2) Hydriertes (aromatisches) Kohlenwasserstoffharz, Erweichungspunkt 89 °C, Exxon Chem., B-Brüssel
(3) Lithene LX16-5MA, Anhydrid-Aeq. 2050 g,
(4) Mit 8 % Ethylendiamin beladenes Molsiebpulver nach Beispiel 2, Aequivalentgewicht ca. 375 g

Es wurden im Kneter bei 190 °C unter Stickstoff die folgenden Komponenten geknetet:

| | g | Aequivalente |
|---|---|---|
| (1) Maleinisertes EVA (Aeq. 9800 g) | 300 | 0.0306 |
| (2) Hydriertes KWHarz | 550 | |
| dann bei 135 °C die folgenden Komponenten zugegben | | |
| (3) Lithene LX16-5MA (Aeq. 2050 g) | 150 | 0.073 |
| (4) Molsiebpulver nach Beispiel 1 | 60 | 0.160 |
| (5) Total | 1060 | |

Stöchiometrisches Verhältnis = 0.65 Anhydridaequivalente / 1 Aminaequivalent.
Der nichtvernetzte Schmelzhaftklebstoff wurde in einer Aluminiumkartusche aufbewahrt.

**Beispiel 4:** Herstellung eines vernetzbaren Schmelzklebstoffs

Verwendete Mischungsbestandteile:

(1) Copolymer von Ethylacrylat und 8 % Maleinsäureanhydrid Mn 6000, Aequivalentgewicht 1225 g Viskosität bei 80 °C 350 000 mPa.s Acronal DS 3436, BASF D-Ludwigshafen
(2) Mit 13 % Ethylendiamin beladenes 4A-Molsiebpulver nach Beispiel 2, Aequivalentgewicht ca. 230 g

Im Vakuumplanetenmischer wurden unter Stickstoff bei 95 °C die folgenden Bestandteile gemischt:

| | g | Aequivalente |
|---|---|---|
| (1) Acronal DS 3436 (Aeq. 1225 g) | 1000 | 0.816 |
| (2) Molsiebpulver (Aeq. 230 g) nach Beispiel 2 | 180 - | 0.78 |
| (3) Total | 1180 | |

1.05 Anhydridaequivalente pro 1 Aminaequivalent

**Patentansprüche**

1. Lagerstabile, vernetzbare Mischung, enthaltend wenigstens ein wasserfreies Molekularsiebpulver aus einem mit mindestens einem Amin wenigstens teilweise beladenen Alkali- oder Erdalkali-Aluminiumsilikat, dadurch gekennzeichnet, dass die Mischung mindestens ein Polymer mit Säureanhydridgruppen enthält und dass das Molekularsiebpulver von Typ 4A oder 5A ist und dass das Amin ausgewählt ist aus der Gruppe bestehend aus Ethylendiamin und Ethanolamin.

2. Vernetzbare Mischung nach Anspruch 1, dadurch gekennzeichnet, dass das Molekularsiebpulver Partikelgrössen unter 50 μm, bevorzugt unter 20 μm aufweist.

3. Vernetzbare Mischung nach einem der vorhergehenden Ansprüche, dadurch gekennzeichnet, dass das Molekularsiebpulver ein Gemisch aus beladenem und unbeladenem Molekularsiebpulver ist.

4. Vernetzbare Mischung nach einem der vorhergehenden Ansprüche, dadurch gekennzeichnet, dass das Molekularsiebpulver mit 3 bis 30 Gewichtsteilen Amin pro 100 Teile wasserfreies Molekularsiebpulver beladen ist.

5. Vernetzbare Mischung nach einem der vorhergehenden Ansprüche, dadurch gekennzeichnet, dass ein oder mehrere Molekularsiebpulver mit verschiedenen Aminen beladen sind.

6. Vernetzbare Mischung nach einem der vorhergehenden Ansprüche, dadurch gekennzeichnet, dass das Molekularsiebpulver mit 5 bis 25 Gewichtsteilen Amin pro 100 Teile wasserfreies Molekularsiebpulver beladen ist.

7. Vernetzbare Mischung nach einem der vorhergehenden Ansprüche, dadurch gekennzeichnet, dass bis 50 Aequivalentprozente der reaktiven Gruppen des Ethylendiamins, welches auf dem Molekularsiebpulver adsorbiert ist, durch Polyole ersetzt ist.

8. Vernetzbare Mischung nach einem der Ansprüche 1 bis 7, dadurch gekennzeichnet, dass mindestens ein Polymer ausgewählt ist aus der Gruppe der

   Copolymeren von Malein- oder Itaconsäureanhydrid mit olefinisch ungesättigten Monomeren,
   Additionsprodukte von ungesättigten cyclischen Säureanhydriden an Polymere mit einzelnen oder konjugierten Doppelbindungen,
   Additionsprodukte von ungesättigten cyclischen Säureanhydriden an Styrol-Butadienkautschuke, oder thermoplastischen Styrol-Butadien- und Styrol-Isopren-Kautschuken oder an ungesättigte Abbauprodukte von hochmolekularen Naturkautschuken,
   Additionsprodukte von ungesättigten cyclischen Säureanhydriden an Polymere mit Mercaptangruppen, Additionsprodukte, welche erhalten wurden durch Propfreaktionen von olefinisch ungesättigten cyclischen Säureanhydriden an Polymere,
   polymere Ester-anhydride oder Amid-anhydride, welche erhalten wurden durch Kondensation von hydroxy- oder aminofunktionellen Polymeren mit Trimellithsäureanhydrid, Pyromellithsäuredianhydrid, Benzoltetracarbonsäure-dianhydrid, Benzophenontetracarbonsäure-dianhydrid oder Ethylen-bis-trimellithsäureanhydrid, wobei die säureanhydridhaltigen Polymere ein Molekulargewicht Mn von 500 bis 1 000 000 Dalton, bevorzugt ein Molekulargewicht Mn von 1000 bis 500 000 Dalton, und eine den Säureanhydridgruppen entsprechende Säurezahl (nach DIN 53 402, bestimmt mit wasserfreier alkoholischer Kaliumhydroxydlösung) von 0.4 bis 445 mg KOH/g aufweisen.

9. Vernetzbare Mischung nach einem der Ansprüche 1 bis 8, dadurch gekennzeichnet, dass ein Gemisch von Polymeren mit unterschiedlichem Gehalt an Säureanhydridgruppen und/oder verschiedenen Molekulargewichtsbereichen eingesetzt wird.

10. Vernetzbare Mischung nach einem der Ansprüche 1 bis 9, dadurch gekennzeichnet, dass das stöchiometrische Verhältnis der Säureanhydridgruppen des Polymers zu Aminogruppen des Vernetzungsmittels im Bereich von 0.5 bis 5 liegt.

**11.** Vernetzbare Mischung nach einem der Ansprüche 1 bis 10, gekennzeichnet durch Zuschlagstoffe, die ausgewählt sind aus der Gruppe bestehend aus anorganischen und organischen Füllstoffen, Pigmenten, Metallpulvern, Farbstoffen, Russ, pyrogener Kieselsäure, kurzgeschnittenen Fasern, Gummipulver, Weichmachern, Extenderölen, Bitumen, nichtreaktiven Polymere, reaktiven Modifizierungsmitteln, Harzen, klebrigmachenden Harzen, Haftvermittlern, organofunktionellen Silanen, Netzmitteln, Silikonölen, flammhemmenden Zusätzen, Alterungsschutzmitteln, Lichtschutzmitteln, Korrosionsschutzmitteln, Geruchsstoffen, fungistatisch und bakteriostatisch wirksamen Stoffen, Thixotropiemitteln, Treibmitteln, Schaumstabilisatoren und Lösungsmitteln.

**12.** Verfahren zur Herstellung von vernetzbaren Mischungen gemäss einem der Ansprüche 1 bis 11, gekennzeichnet durch homogenes Mischen von mindestens einem säureanhydridgruppenhaltigen Polymeren und einem wasserfreien Molekularsiebpulver aus wenigstens einem mit mindestens einem Amin wenigstens teilweise beladenen wasserfreiem Alkali- oder Erdalkali-aluminiumsilikat und wahlweisen Zuschlagstoffen.

**13.** verfahren zum Herstellen von bei oder über Desorptionstemperatur vernetzter Polymersysteme, gekennzeichnet durch die folgenden Schritte:

(a) Bereitstellung einer homogenen im wesentlichen wasserfreien Mischung gemäss Anspruch 1, mit gegebenenfalls weiteren Zuschlagstoffen;

(b) Applikation der unter (a) genannten Mischung;

(c) Erwärmen der unter (b) applizierten Mischung auf Temperaturen gleich oder über der Desorptionstemperatur der auf dem Molekularsiebpulver adsorbierten Amine, wobei nach Freisetzung des Amins Vernetzung zwischen den Säureanhydridgruppen und dem Amin ausgelöst wird.

## Claims

**1.** A storage-stable cross-linkable mixture containing at least one water-free molecular sieve powder comprising an alkali metal or alkaline earth aluminium silicate at least partially charged with at least one amine, characterised in that the mixture contains at least one polymer with acid anhydride groups and that the molecular sieve powder is of type 4A or 5A and that the amine is selected from the group consisting of ethylene diamine and ethanolamine.

**2.** A cross-linkable mixture according to claim 1 characterised in that the molecular sieve powder has particle sizes of below 50 $\mu$m, preferably below 20 $\mu$m.

**3.** A cross-linkable mixture according to one of the preceding claims characterised in that the molecular sieve powder is a mixture of charged and uncharged molecular sieve powder.

**4.** A cross-linkable mixture according to one of the preceding claims characterised in that the molecular sieve powder is charged with 3 to 30 parts by weight of amine per 100 parts of water-free molecular sieve powder.

**5.** A cross-linkable mixture according to one of the preceding claims characterised in that one or more molecular sieve powders are charged with different amines.

**6.** A cross-linkable mixture according to one of the preceding claims characterised in that the molecular sieve powder is charged with 5 to 25 parts by weight of amine per 100 parts of water-free molecular sieve powder.

**7.** A cross-linkable mixture according to one of the preceding claims characterised in that up to 50 equivalent percent of the reactive groups of the ethylene diamine which is adsorbed on the molecular sieve powder is replaced by polyhydric alcohols.

**8.** A cross-linkable mixture according to one of claims 1 to 7 characterised in that at least one polymer is selected from the group of

copolymers of maleic or itaconic acid anhydride with olefinically unsaturated monomers,
addition products of unsaturated cyclic acid anhydrides to polymers with single or conjugate double bonds,
addition products of unsaturated cyclic acid anhydrides to styrene-butadiene rubbers, or thermoplastic styrene-butadiene and styreneisoprene rubbers or to unsaturated decomposition products of high-molecular natural rubbers,
addition products of unsaturated cyclic acid anhydrides to polymers with mercaptan groups, addition products which were obtained by graft reactions of olefinically unsaturated cyclic acid anhydrides to polymers,
polymeric ester anhydrides or amide anhydrides which were obtained by condensation of hydroxy- or amino-functional polymers with trimellitic acid anhydride, pyromellitic acid dianhydride, benzene tetracarboxylic acid anhydride, benzophenone tetracarboxylic acid dianhydride or ethylene-bis-trimellitic acid anhydride,
wherein the acid anhydride-bearing polymers are of a molecular weight Mn of 500 to 1,000,000 Daltons, preferably a molecular weight Mn of 1,000 to 500,000 Daltons, and have an acid number corresponding to the acid anhydride groups (in accordance with DIN 53 402, determined with water-free alcoholic potassium hydroxide solution) of 0.4 to 445 mg KOH/g.

9.  A cross-linkable mixture according to one of claims 1 to 8 characterised in that a mixture of polymers with different contents of acid anhydride groups and/or of different molecular weight ranges is used.

10. A cross-linkable mixture according to one of claims 1 to 9 characterised in that the stoichiometric ratio of the acid anhydride groups of the polymer to amino groups of the cross-linking agent is in the range of 0.5 to 5.

11. A cross-linkable mixture according to one of claims 1 to 10 characterised by additives which are selected from the group consisting of organic and inorganic fillers, pigments, metal powders, dyestuffs, carbon black, pyrogenic silicic acid, short-cut fibres, rubber powder, plasticisers, extender oils, bitumen, non-reactive polymers, reactive modifying agents, resins, tackifying resins, bonding agents, organo-functional silanes, wetting agents, silicone oils, flame-retardant additives, anti-ageing additives, light-protection agents, anti-corrosion agents, odorous substances, substances with a fungistatic and bacteriostatic action, thixotropy agents, propellants, foam stabilisers and solvents.

12. A process for the production of cross-linkable mixtures according to one of claims 1 to 11 characterised by homogenous mixing of at least one acid anhydride group-bearing polymer and a water-free molecular sieve powder comprising at least one water-free alkali metal or alkaline earth aluminium silicate at least partially charged with at least one amine, and optional additives.

13. A process for the production of polymer systems which are crosslinked at or above desorption temperature, characterised by the following steps:

    (a) preparing a homogeneous, substantially water-free mixture according to claim 1, with possibly further additives;
    (b) application of the mixture set forth in (a); and
    (c) heating the mixture applied in (b) to temperatures equal to or above the desorption temperature of the amines adsorbed on the molecular sieve powder, wherein after liberation of the amine cross-linking is initiated between the acid anhydride groups and the amine.

**Revendications**

1.  Mélange réticulable stable au stockage, contenant au moins une poudre de tamis moléculaire anhydre constituée d'un aluminosilicate d'un métal alcalin ou d'un métal alcalino-terreux, au moins partiellement chargé d'au moins une amine, caractérisé en ce qu'il contient au moins un polymère comportant des groupes anhydride d'acide, en ce que la poudre de tamis moléculaire est du type 4A ou 5A, et en ce que l'amine est choisie dans l'ensemble comprenant l'éthylènediamine et l'éthanolamine.

2.  Mélange réticulable selon la revendication 1, caractérisé en ce que la poudre de tamis moléculaire a une granulométrie inférieure à 50 µm et de préférence inférieure à 20 µm.

3.  Mélange réticulable selon l'une des revendications précédentes, caractérisé en ce que la poudre de tamis moléculaire est un mélange d'une poudre de tamis moléculaire chargée et d'une poudre de tamis moléculaire non chargée.

4.  Mélange réticulable selon l'une des revendications précédentes, caractérisé en ce que la poudre de tamis moléculaire est chargée de 3 à 30 parties en poids d'amine pour 100 parties de poudre de tamis moléculaire anhydre.

**5.** Mélange réticulable selon l'une des revendications précédentes, caractérisé en ce qu'une ou plusieurs poudres de tamis moléculaire sont chargées d'amines différentes.

**6.** Mélange réticulable selon l'une des revendications précédentes, caractérisé en ce que la poudre de tamis moléculaire est chargée de 5 à 25 parties en poids d'amine pour 100 parties de poudre de tamis moléculaire anhydre.

**7.** Mélange réticulable selon l'une des revendications précédentes, caractérisé en ce que jusqu'à 50 % en équivalents des groupes réactifs de l'éthylènediamine qui est adsorbée par la poudre de tamis moléculaire sont remplacés par des polyols.

**8.** Mélange réticulable selon l'une des revendications 1 à 7, caractérisé en ce qu'au moins un polymère est choisi dans l'ensemble comprenant :

- les copolymères de l'anhydride maléique ou de l'anhydride itaconique avec des monomères à insaturation oléfinique,
- les produits d'addition d'anhydrides d'acide cycliques insaturés sur des polymères comportant des doubles liaisons individuelles ou conjuguées,
- les produits d'addition d'anhydrides d'acide cycliques insaturés sur des caoutchouc styrène-butadiène ou des caoutchoucs thermoplastiques styrène-butadiène et styrène-isoprène, ou sur des produits de dégradation insaturés de caoutchoucs naturels à grande masse moléculaire,
- les produits d'addition d'anhydrides d'acide cycliques insaturés sur des polymères comportant des groupes mercaptan,
- les produits d'addition qui ont été obtenus par des réactions de greffage d'anhydrides d'acide cycliques à insaturation oléfinique sur des polymères,
- des ester-anhydrides ou amide-anhydrides polymères qui ont été obtenus par condensation de polymères à fonctionnalité hydroxy ou amino avec de l'anhydride trimellitique, du dianhydride pyromellitique, du dianhydride benzènetétracarboxylique, du dianhydride benzophénonetétracarboxylique ou de l'anhydride éthylènebistrimellitique,

les polymères contenant des anhydrides d'acide ayant une masse moléculaire Mn de 500 à 1.000.000 daltons, de préférence une masse moléculaire Mn de 1000 à 500.000 daltons, et ayant un indice d'acide, correspondant aux groupes anhydride d'acide, (selon DIN 53 402, déterminé avec une solution alcoolique anhydre d'hydroxyde de potassium) de 0,4 à 445 mg KOH/g.

**9.** Mélange réticulable selon l'une des revendications 1 à 8, caractérisé en ce qu'on utilise un mélange de polymères ayant différentes teneurs en groupes anhydride d'acide et/ou des masses moléculaires entrant dans différentes plages de masses moléculaires.

**10.** Mélange réticulable selon l'une des revendications 1 à 9, caractérisé en ce que le rapport stoeochiométrique des groupes anhydride d'acide du polymère aux groupes amino de l'agent de réticulation est dans la plage de 0,5 à 5.

**11.** Mélange réticulable selon l'une des revendications 1 à 10, caractérisé par des adjuvants qui sont choisis dans l'ensemble comprenant les matières de charge organiques et inorganiques, les pigments, les poudres métalliques, les colorants, le noir de carbone, l'acide silicique pyrogène, les fibres courtes, la poudre de caoutchouc, les plastifiants, les huiles de dilution, le bitume, les polymères non réactifs, les modifiants réactifs, les résines, les résines de pégosité, les promoteurs d'adhérence, les silanes à fonctionnalité organique, les mouillants, les huiles de silicone, les additifs inhibiteurs de flamme, les agents de protection contre le vieillissement, les agents de protection contre la lumière, les agents de protection contre la corrosion, les substances odorantes, les substances à effet fongistatique et bactériostatique, les agents de thixotropie, les agents porogènes les stabilisateurs de mousse et les solvants.

**12.** Procédé de préparation de mélanges réticulables selon l'une des revendications 1 à 11, caractérisé par le mélange homogène d'au moins un polymère contenant des groupes anhydride d'acide, d'au moins une poudre de tamis moléculaire anhydre constituée d'au moins un aluminosilicate d'un métal alcalin ou alcalino-terreux, anhydre, au moins partiellement chargé d'au moins une amine, et éventuellement d'adjuvants.

**13.** Procédé de préparation de systèmes polymères réticulés à une température supérieure ou égale à la température de désorption, caractérisé par les étapes suivantes :

(a) préparation d'un mélange homogène, sensiblement anhydre, selon la revendication 1, avec éventuellement d'autres adjuvants ;

(b) application du mélange mentionné en (a) ;

(c) chauffage du mélange appliqué en (b) à des températures supérieures ou égales à la température de désorption des amines adsorbées par la poudre de tamis moléculaire, ce qui, après libération de l'amine, déclenche une réticulation entre les groupes anhydride d'acide et l'amine.